# FASCICULE DE BREVET EUROPEEN

(11) **EP 1 035 017 B1**
(45) Date de publication et mention de la délivrance du brevet: **26.05.2004**
(21) Numéro de dépôt: 00400593.0
(22) Date de dépôt: 06.03.2000
(51) Int. Cl.: B64G 7/00, B64G 1/50

(54) **Procédé de simulation des flux thermiques externes absorbés en vol par les éléments radiatifs extérieurs d'un engin spatial et engin spatial pour la mise en oeuvre de ce procédé**
Verfahren für die Simulation der äusseren Wärmeströme, die von den Abstrahlelementen eines Raumfahrzeuges während des Fluges absorbiert werden, und Raumfahrzeug für die Durchführung dieses Verfahrens
Method for the simulation of the external thermal flows absorbed by spacecraft external radiator elements in flight and spacecraft for the application of said method

(30) Priorité: 11.03.1999 FR 9902995
(43) Date de publication de la demande: 13.09.2000
(73) Titulaire: ALCATEL, 75008 Paris (FR)
(72) Inventeur: Arbusti, Francis, 06150 Cannes La Bocca (FR)
(74) Mandataire: Smith, Bradford Lee

(56) Documents cités:
- EP-A- 1 004 507
- WEYDANDT J, BECKMANN K: "Large Spacecraft and Related Verification Aspects of the Thermal Design" 14TH INTERSOCIETY CONFERENCE ON ENVIRONMENTAL SYSTEMS, 16 - 19 juillet 1984, XP002121116 San Diego, CA, USA
- KIM J H, HYMAN N L: "Clementine Thermal Design and Verification Testing: Quick, Cheap, Unusual, Successful" 26TH INTERNATIONAL CONFERENCE ON ENVIRONMENTAL SYSTEMS, 8 - 11 juillet 1996, XP002121117 Monterey, CA, USA
- WINGATE C A: "Thermal Balance Testing with Infrared Shrouds, An Economical Alternative to Solar Simulation" 35TH CONGRESS OF THE INTERNATIONAL ASTRONAUTICAL FEDERATION,1984, XP002121118 Lausanne, Suisse
- PATENT ABSTRACTS OF JAPAN vol. 015, no. 386 (M-1163) 30 Septembre 1991 & JP 03 157 300 A (NATL SPACE DEV AGENCY JAPANUNASDAU) 05 Juillet 1991

## Description

### Domaine technique

L'invention concerne principalement un procédé permettant de simuler au sol les flux thermiques externes absorbés en vol par chacun des éléments radiatifs extérieurs d'un engin spatial tel qu'un satellite artificiel ou une sonde spatiale.

L'invention concerne également un engin spatial conçu de façon à permettre la simulation des flux thermiques externes absorbés en vol par ces éléments radiatifs extérieurs, sans qu'il soit nécessaire de recourir à une maquette.

### Etats de la technique

Lorsqu'ils sont en vol, les engins spatiaux tels que les satellites artificiels et les sondes spatiales sont soumis à des flux thermiques externes tels que albedos, flux infrarouge en provenance de la terre et flux solaire.

Afin de protéger de ces flux thermiques externes les équipements embarqués dans un engin spatial, il est d'usage de recouvrir la majeure partie des surfaces extérieures de la structure de l'engin d'un matériau thermiquement isolant. Ce matériau, couramment appelé "super isolation", se présente généralement sous la forme d'un empilement de feuilles d'une matière plastique isolante telle que du Kapton (Marque déposée).

Par ailleurs, certains des équipements embarqués dans les engins spatiaux dissipent de la chaleur lorsqu'ils sont mis en oeuvre. Ces équipements doivent faire l'objet d'un agencement particulier, afin d'éviter que la température n'atteigne un niveau trop élevé à l'intérieur des engins.

Cet agencement consiste à monter, dans la mesure du possible, chacun des équipements concernés directement contre la face intérieure des panneaux formant la structure extérieure de l'engin spatial, à ménager une fenêtre dans la super isolation, en face de l'équipement, et à coller sur la surface extérieure du panneau, à l'emplacement de cette fenêtre, un élément radiatif extérieur.

Ces éléments radiatifs extérieurs participent au contrôle thermique passif de l'engin spatial. Ils ont pour fonctions de rejeter vers l'extérieur la chaleur dégagée par les équipements et de minimiser l'échauffement de l'engin spatial sous l'effet des flux thermiques externes incidents (solaire, albedos et infrarouge terrestre). A cet effet, ils rayonnent de manière conséquente dans l'infrarouge et ils réfléchissent la majeure partie des rayonnements extérieurs. A titre d'illustration, les éléments radiatifs extérieurs existants présentent généralement une émissivité dans l'infrarouge voisine de 0,80 et un coefficient d'absorption des rayonnements solaire et albedos qui évolue d'environ 0,1 en début de vie jusqu'à environ 0,2 en fin de vie.

Les éléments radiatifs utilisés sur les engins spatiaux sont constitués, par exemple, d'un film plastique métallisé sur sa face extérieure. Le film plastique peut notamment être en poly-fluoro-éthylène-propylène, en Kapton (Marque déposée) ou en Mylar (Marque déposée). Le métal est généralement de l'aluminium ou de l'argent.

Lors de la conception et de la réalisation d'un engin spatial, on procède à un grand nombre d'essais, afin de s'assurer que l'engin sera bien apte à remplir sa mission pendant la durée de vie souhaitée, après son lancement. Ces essais incluent notamment un essai d'équilibre thermique de l'engin spatial.

Au cours de l'essai d'équilibre thermique, on simule l'échauffement des éléments constitutifs de l'engin spatial, sous l'action des flux thermiques externes susceptibles d'être absorbés en vol par l'engin spatial.

Une première technique connue pour tester le comportement d'un engin spatial en présence des flux thermiques externes qu'il est appelé à absorber en vol consiste à placer une maquette de l'engin dans un caisson sous vide équipé d'un simulateur solaire et présentant des températures d'enceinte très basses, afin de simuler le froid spatial.

Toutefois, cette technique a pour inconvénients d'être lourde, longue, coûteuse et de ne pas permettre la simulation de la totalité des flux thermiques. En effet, elle est limitée aux flux solaires, et ne peut simuler les flux infrarouges et albedos terrestres, qui sont prépondérants en orbites basses.

Une deuxième technique connue consiste à simuler au sol les flux solaires, albedos et infrarouges terrestres rencontrés par l'engin spatial en vol, en plaçant dans le moyen d'essai thermique des tubes radiants permettant de réchauffer les faces externes de l'engin spatial. Toutefois, cette technique a pour inconvénient de ne pas permettre une qualification du comportement thermique de l'engin spatial. En effet, le manque de protection du procédé ne permet pas une reproduction parfaite des flux thermiques environnant l'engin spatial.

Une troisième technique connue consiste à simuler, au sol, les flux solaires, albedos et infrarouges terrestres rencontrés en vol par l'engin spatial en plaçant sur l'engin spatial des réchauffeurs d'essais collés sur les surfaces internes ou externes de ses panneaux radiatifs.

Cependant, le collage des réchauffeurs d'essais sur la face interne des panneaux radiatifs ne permet généralement pas une reproduction parfaite des flux solaires albedos et infrarouges terrestres rencontrés en vol par l'engin spatial. En effet, les contraintes d'aménagement permettent pas de répartir ces réchauffeurs avec l'homogénéité surfacique nécessaire à une reproduction parfaite des phénomènes thermiques.

Par ailleurs, lorsque les réchauffeurs d'essais sont collés sur les surfaces externes des panneaux radiatifs (technique connue et notamment décrite dans l'article "Clementine Thermal Design and Verification Testing : Quick, Cheap, Unusual, Successful" de J. H. Kim et al, publié dans "S.A.E. Technical Paper Series" - "26^{th} International Conference on Environmental Systems, Monterey, California" - 8-11 Juillet 1996), l'engin perd les propriétés thermo-optiques de ses panneaux radiatifs, du fait de la présence des réchauffeurs. Cela impose l'utilisation d'une maquette thermique spécifique dont la réalisation alourdit sensiblement la durée de préparation de l'essai et donc son coût.

Enfin, la demande de brevet japonaise publiée sous le numéro de publication n°JP03157300 et intitulée "Artificial satellite" concerne un procédé de simulation de la chaleur externe tel que le flux solaire. Il y est prévu d'entreposer un élément chauffant entre une plaque de radiation thermique et le panneau de structure aux fins desdites simulations. Cependant, une fois les simulations terminées, l'élément chauffant est retiré, ce qui est coûteux en temps et en main-d'oeuvre.

### Exposé de l'invention

L'invention a précisément pour objet un nouveau procédé de simulation des flux thermiques externes absorbés en vol par les éléments radiatifs extérieurs d'un engin spatial, permettant de réduire le coût et la durée des essais d'équilibre thermique en autorisant leur réalisation directement sur l'engin destiné à être lancé dans l'espace, sans utiliser de simulateur solaire.

Conformément à l'invention, ce résultat est obtenu au moyen d'un procédé de simulation des flux thermiques externes absorbés en vol par au moins un élément radiatif extérieur d'un engin spatial, le procédé consistant à intégrer des moyens de chauffage entre ledit élément radiatif extérieur et un panneau supportant cet élément, et à simuler lesdits flux en mettant en oeuvre les moyens de chauffage, caractérisé en ce que lesdits moyens de chauffage sont intégrés à demeure.

Du fait que les moyens de chauffage destinés à simuler les flux thermiques externes sont intégrés entre les éléments radiatifs et les panneaux qui les supportent, les propriétés particulières des éléments radiatifs ne sont pas perturbées par ces moyens de chauffage. Par conséquent, les moyens de chauffage peuvent être intégrés directement dans le modèle de vol de l'engin spatial, sans qu'il soit nécessaire d'en réaliser une maquette. Une réduction substantielle du coût et de la durée des essais est ainsi obtenue.

Selon une forme de réalisation préférée de l'invention, on utilise des moyens de chauffage électriques, reliés par des conducteurs électriques à une source d'alimentation électrique extérieure lors de la simulation du flux thermique externe.

Lorsque la simulation du flux thermique externe est terminée, on laisse en place les moyens de chauffage, en prenant soin de sectionner les conducteurs électriques et de relier les connecteurs électriques des moyens de chauffage à la masse de l'engin spatial.

De préférence, on intègre les moyens de chauffage en une seule et même opération, lors du montage de l'élément radiatif extérieur sur le panneau.

Dans ce cas, on place successivement sur le panneau un premier film de colle, des bandes de réchauffage parallèles entre elles, formant les moyens de chauffage, un deuxième film de colle et l'élément radiatif extérieur, et on soumet l'ensemble ainsi constitué à une pression assurant le collage, par exemple en utilisant une vessie sous vide.

L'invention concerne également un engin spatial comprenant une structure incluant des panneaux dont l'un au moins supporte, sur une face extérieure, au moins un élément radiatif extérieur, caractérisé par le fait que des moyens de chauffage, aptes à être mis en oeuvre lors d'une simulation des flux thermiques externes absorbés en vol par ledit élément radiatif extérieur, sont intégrés à demeure entre cet élément et le panneau qui le supporte.

Les moyens de chauffage, qui sont des moyens de chauffage électriques dans la forme de réalisation préférée de l'invention, comprennent de préférence des bandes de réchauffage parallèles entre elles, dont les extrémités sont reliées les unes aux autres par des connecteurs électriques, au-delà des bords périphériques de l'élément radiatif.

### Brève description des dessins

On décrira à présent, à titre d'exemple non limitatif, un mode de réalisation préféré de l'invention, en se référant aux dessins annexés, dans lesquels :
- la figure 1 est une vue de côté en coupe éclatée qui illustre de façon très schématique une partie d'un engin spatial conçu pour permettre la mise en oeuvre du procédé selon l'invention ;
- la figure 2 est une vue de côté en coupe éclatée qui représente à plus grande échelle le montage des moyens de chauffage utilisés conformément à l'invention ; et
- la figure 3 est une vue de face, avec arrachements partiels, illustrant également l'implantation des moyens de chauffage utilisés conformément à l'invention.

### Description détaillée d'un mode de réalisation préféré de l'invention

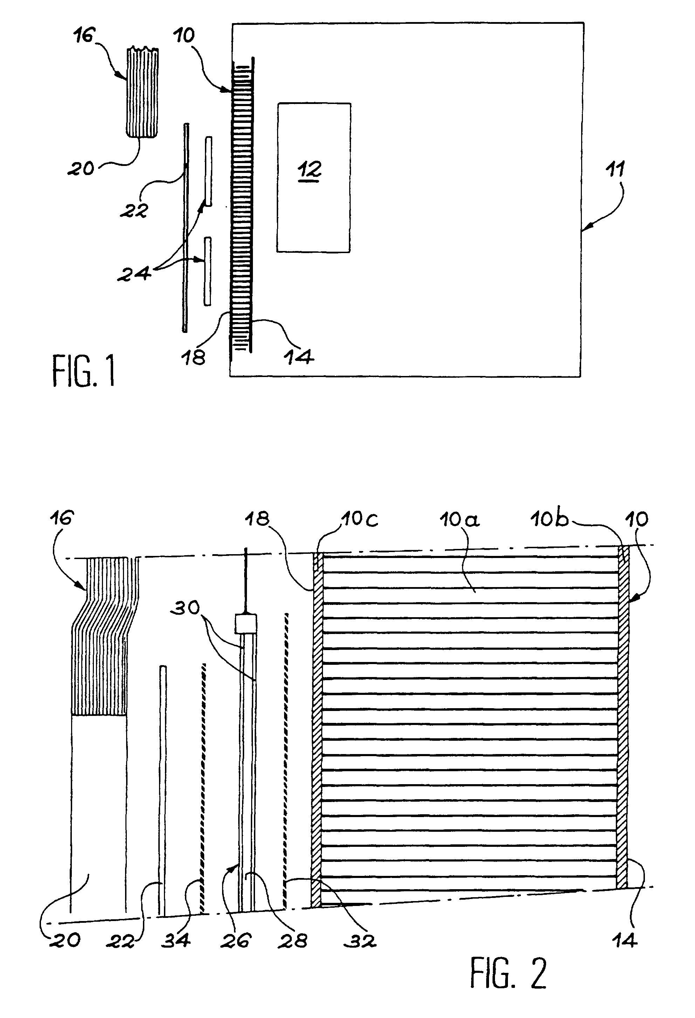

Sur la figure 1, la référence 10 désigne une partie de l'un des panneaux formant la structure extérieure d'un engin spatial 11 tel qu'un satellite. Le panneau 10 se présente habituellement sous la forme d'un panneau sandwich comprenant une âme 10a en nid d'abeilles (figure 2) recouverte d'une peau 10b, 10c sur chacune de ses faces. Il est à noter qu'en variante, l'âme 10a en nid d'abeilles peut être remplacée par une âme en mousse alvéolaire. Les peaux 10b, 10c et l'âme 10a du panneau 10 sont par exemple réalisées en aluminium.

Un équipement 12, susceptible de dissiper de la chaleur lorsqu'il est mis en oeuvre, est fixé sur la face intérieure 14 du panneau 10. Les moyens utilisés pour fixer l'équipement 12 sur le panneau 10 sont bien connus de l'homme du métier et ne font pas partie de l'invention. Pour simplifier, ils n'ont pas été représentés sur la figure.

Comme on l'a représenté schématiquement en 16 sur les figures 1 et 2, le panneau 10 est recouvert, sur la majeure partie de sa surface extérieure 18, d'une isolation thermique généralement appelée "super isolation". Comme on l'a déjà indiqué, la super isolation 16 est constituée par un empilement d'un grand nombre de feuilles ou films en une matière plastique isolante telle que du Kapton (Marque déposée). Les moyens utilisés pour assurer la fixation de la super isolation 16 sur la surface extérieure 18 du panneau 10 sont bien connus de l'homme du métier et ne font pas partie de l'invention. Ils n'ont donc pas été représentés sur les figures, pour en faciliter la compréhension.

En face de l'équipement 12, une fenêtre 20 est pratiquée dans la super isolation 16, afin que la chaleur dissipée par cet équipement, lors de sa mise en oeuvre, puisse s'évacuer vers l'extérieur de l'engin spatial.

Un élément radiatif extérieur 22 est placé sur la face extérieure 18 du panneau 10, en face de l'équipement 12 et de la fenêtre 20. Plus précisément, l'élément radiatif extérieur 22 recouvre toute la surface extérieure 18 du panneau 10 exposée au travers de la fenêtre 20, et s'étend légèrement en dessous de la super isolation 16, à proximité du bord de celle-ci délimitant la fenêtre 20.

Comme on l'a déjà noté, l'élément radiatif extérieur 22 permet l'évacuation par rayonnement de la majeure partie de la chaleur dissipée dans l'infrarouge par l'équipement 12, tout en réfléchissant vers l'extérieur la majeure partie des rayonnements solaire, albedos et infrarouge terrestre incidents. A cet effet, l'élément radiatif extérieur 22 est généralement constitué d'un film de matière plastique métallisé sur sa face extérieure. Le film est réalisé par exemple en poly-fluoro-éthylène-propylène, en Kapton (Marque déposée) ou en Mylar (Marque déposée), et le métal est généralement de l'aluminium ou de l'argent. L'élément radiatif extérieur 22 présente habituellement une émissivité infrarouge d'environ 0,80 et un coefficient d'absorption albedos et solaire qui varie entre environ 0,1 en début de vie et environ 0,2 en fin de vie.

Conformément à l'invention, des moyens de chauffage 24 sont interposés entre l'élément radiatif extérieur 22 et la surface extérieure 18 du panneau 10. Ces moyens de chauffage 24 sont destinés à permettre la simulation de l'échauffement des différents éléments de l'engin spatial sous l'action du flux thermique externe absorbé en vol par l'élément radiatif extérieur 22. Cette simulation a lieu lors d'un essai d'équilibre thermique effectué au sol directement sur l'engin spatial.

A cet effet, l'engin spatial est placé dans une enceinte sous vide (non représentée) dépourvue de simulateur solaire. Les moyens de chauffage 22 sont ensuite mis en oeuvre afin de simuler le flux thermique externe susceptible d'être absorbé par l'engin tout au long de sa durée de vie dans l'espace. Lorsque l'essai est terminé, les moyens de chauffage 24 restent en place entre l'élément radiatif extérieur 22 et le panneau 10 de l'engin spatial, dont ils font partie intégrante. En effet, l'agencement particulier des moyens de chauffage 24 permet de ne pas modifier les propriétés d'émissivité et de réflexion de l'élément radiatif extérieur 22.

Le procédé conforme à l'invention permet donc de rendre facultative la fabrication d'une maquette thermique et d'utiliser un caisson sous vide dépourvu de simulateur solaire. On réalise ainsi une économie et un gain de temps conséquents par rapport aux procédés antérieurs connus.

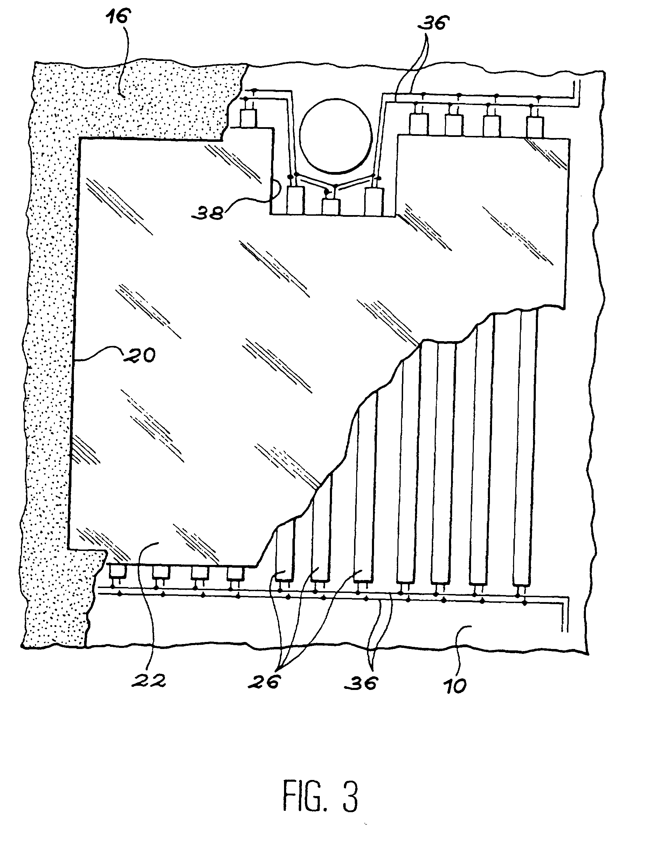

La technique d'intégration des moyens de chauffage 24 entre l'élément radiatif extérieur 22 et le panneau 10 va à présent être décrite en détail, à titre d' exemple nullement limitatif , en se référant aux figures 2 et 3.

Comme l'illustrent ces figures, on utilise avantageusement des moyens de chauffage 24 de type électrique, qui se présentent sous la forme de bandes de réchauffage 26, de forme sensiblement rectangulaire. A titre d'illustration nullement limitative, ces bandes de réchauffage 26 présentent par exemple une largeur de 12 mm ou 27 mm et une longueur inférieure à 800 mm. Les bandes de réchauffage 26 sont appliquées parallèlement les unes aux autres sur la surface extérieure 18 du panneau 10, de telle sorte que toutes les bandes adjacentes soient séparées sensiblement par une même distance.

Chacune des bandes de réchauffage 26 peut notamment être constituée d'une feuille de matériau réfractaire 28 (figure 2) insérée entre deux feuilles isolantes 30. Le matériau réfractaire constituant la feuille 28 peut notamment être de l'Inconel (Marque déposée). Le matériau isolant dans lequel sont formées les feuilles 30 peut notamment être du Kapton (Marque déposée) d'environ 25 µm d'épaisseur. Les feuilles 30 sont fermement collées à la feuille 28, sur les deux faces de cette dernière.

Afin d'améliorer le collage et d'éliminer le risque de formation de bulles, la feuille de matériau réfractaire 28 et les deux feuilles isolantes 30 comportent des trous régulièrement répartis sur leur surface. A titre d'exemple, des trous circulaires d'environ 1,5 mm de diamètre peuvent notamment être réalisés tous les 5 mm dans la feuille 28, aussi bien dans le sens de la longueur que dans le sens de la largeur. Des trous circulaires d'environ 0,5 mm de diamètre sont alors formés dans les feuilles isolantes 30, au centre de chacun des trous de la feuille 28.

Lorsque la feuille de matériau réfractaire 28 de chacune des bandes de réchauffage 26 est parcourue par un courant électrique, elle fournit une dissipation thermique permettant de simuler l'échauffement des éléments de l'engin spatial sous l'action des flux thermiques externes. Le niveau de l'échauffement simulé dépend de l'intensité du courant qui traverse la feuille de matériau réfractaire 28.

Comme l'illustre schématiquement la figure 2, l'intégration des bandes de réchauffage 26 entre l'élément radiatif extérieur 22 et le panneau 10 s'effectue en une seule et même opération, lors du montage de l'élément radiatif extérieur 22 sur le panneau 10.

De façon plus précise, on recouvre tout d'abord la surface extérieure 18 du panneau 10 d'un premier film de colle 32. On implante alors les bandes de réchauffage 26 sur le panneau 10 recouvert du premier film de colle 32. L'ensemble ainsi obtenu est ensuite recouvert d'un deuxième film de colle 34. Enfin, on appose l'élément radiatif extérieur 22 sur le deuxième film de colle 34.

Afin d'effectuer le collage, on recouvre l'ensemble ainsi obtenu d'une membrane (non représentée) équipée d'une ou plusieurs valves de prise d'air. Les bords périphériques de cette membrane coopèrent directement avec la surface extérieure 18 du panneau 10, autour de la zone de collage, par des joints d'étanchéité appropriés (non représentés) selon une technique bien connue de l'homme du métier. On applique ensuite une pression sur l'empilement constitué par le premier film de colle 32, les bandes de réchauffage 26, le deuxième film de colle 34 et l'élément radiatif extérieur 22, en mettant sous vide l'intérieur de la membrane par pompage de l'air au travers des valves qui équipent celle-ci.

Comme le montre en particulier la figure 3, le recouvrement des bandes de réchauffage 26 par l'élément radiatif extérieur 22 est réalisé de telle sorte que les extrémités des bandes de réchauffage dépassent des bords périphériques de cet élément. Ces extrémités sont réunies entre elles, au-delà des bords périphériques de l'élément radiatif extérieur 22, par des connecteurs électriques 36. Ces connecteurs électriques 36 permettent de raccorder les bandes de réchauffage 26 à une source d'alimentation électrique extérieure (non représentée), au moyen de conducteurs électriques (non représentés), lorsque les essais d'équilibre thermique sont effectués.

Lorsque les essais sont terminés, les conducteurs électriques d'alimentation (non représentés) sont sectionnés et on relie les connecteurs électriques 36 à la masse de l'engin spatial. Seuls les moyens de chauffage 24 constitués par les bandes de réchauffage 26 restent alors en place, comme on l'a indiqué précédemment.

Il est à noter que l'intégration des moyens de chauffage 24 entre l'élément radiatif extérieur 22 et le panneau 10 est réalisée de façon à permettre la mise à la masse de l'élément radiatif extérieur. Cette mise à la masse peut notamment être faite au moyen de pions de métallisation (non représentés) interposés entre les bandes de réchauffage 26, de façon à relier électriquement des régions périphériques de l'élément radiatif extérieur 22 à la surface extérieure 18 du panneau 10.

Comme on l'a illustré schématiquement sur la figure 3, les parties de la super isolation 16 bordant la fenêtre 20 sont mises en place sur le panneau 10 lorsque les moyens de chauffage 24 et l'élément radiatif extérieur 22 ont été collés sur la face extérieure 18 du panneau 10. Le bord de la super isolation 16 est fixé directement sur la surface 18 du panneau 10 par des éléments de fixation, par exemple de type Velcro (marque déposée). Cette fixation s'effectue alors entre les bandes de réchauffage 26, dans des zones telles que 38 (figure 3) où l'élément radiatif extérieur 24 a été ajouré.

Par ailleurs, le schéma de câblage électrique des bandes de réchauffage 26 est réalisé de façon à éviter tout risque de court-circuit de ces bandes, après la déconnexion éventuelle de certaines d'entre-elles, suite au recouvrement des connexions par la super isolation 16.

En outre, le recouvrement par la super isolation 16 du bord périphérique de l'ensemble constitué par les bandes de réchauffage 26 et l'élément radiatif extérieur 22 peut être adapté, après l'essai d'équilibre thermique, pour tenir compte des enseignements de cet essai.

Bien entendu, l'invention n'est pas limitée au mode de réalisation qui vient d'être décrit précisément à titre d'exemple. En particulier, les moyens de chauffage peuvent être de nature et/ou de forme différentes, sans sortir du cadre de l'invention.

## Revendications

1. Procédé de simulation des flux thermiques externes absorbés en vol par au moins un élément radiatif extérieur (22) d'un engin spatial (11), ledit procédé consistant à intégrer des moyens de chauffage (24) entre ledit élément radiatif extérieur (22) et un panneau (10) supportant cet élément, à simuler lesdits flux en mettant en oeuvre les moyens de chauffage (24), **caractérisé en ce que** lesdits moyens de chauffage sont intégrés à demeure.

2. Procédé selon la revendication 1, **caractérisé en ce qu'**on utilise des moyens de chauffage électriques (24), reliés par des conducteurs électriques à une source d'alimentation électrique extérieure, lors de la simulation du flux thermique externe.

3. Procédé selon la revendication 2, **caractérisé en ce que**, lorsque la simulation du flux thermique externe est terminée, on sectionne les conducteurs électriques et on relie les connecteurs électriques (36) des moyens de chauffage (24) à la masse de l'engin spatial.

4. Procédé selon l'une quelconque des revendications précédentes, **caractérisé en ce qu'**on intègre les moyens de chauffage (24) en une seule et même opération, lors du montage de l'élément radiatif extérieur (22) sur le panneau (10).

5. Procédé selon la revendication 4, **caractérisé en ce qu'**on place successivement sur le panneau (10) un premier film de colle (32), des bandes de réchauffage (26) parallèles entre elles, formant les moyens de chauffage (24), un deuxième film de colle (34) et l'élément radiatif extérieur (22), et on soumet l'ensemble ainsi constitué à une pression assurant le collage.

6. Engin spatial comprenant une structure incluant des panneaux dont l'un (10) au moins supporte, sur une face extérieure (18), au moins un élément radiatif extérieur (22), **caractérisé par le fait que** des moyens de chauffage (24), aptes à être mis en oeuvre lors d'une simulation des flux thermiques externes absorbés en vol par ledit élément radiatif extérieur (22), sont intégrés à demeure entre cet élément et le panneau (10) qui le supporte.

7. Engin spatial selon la revendication 6, **caractérisé en ce que** les moyens de chauffage sont des moyens de chauffage électriques (24).

8. Engin spatial selon la revendication 7, **caractérisé en ce que** les moyens de chauffage électriques (24) comprennent des bandes de réchauffage (26) parallèles entre elles, dont les extrémités sont reliées les unes aux autres par des connecteurs électriques (36), au-delà des bords périphériques de l'élément radiatif (22).

9. Engin spatial selon la revendication 8, **caractérisé en ce que** chacune des bandes de réchauffage (26) est formée d'une feuille de matériau réfractaire (28) insérée entre deux feuilles isolantes (30).

10. Engin spatial selon la revendication 9, **caractérisé en ce que** la feuille de matériau réfractaire (28) et les deux feuilles isolantes (30) comportent des trous régulièrement répartis sur leur surface.

## Patentansprüche

1. Verfahren zur Simulation der äußeren Wärmeströmungen, die von mindestens einem äußeren Abstrahlelement (22) eines Raumfahrzeugs (11) im Flug absorbiert werden, welches darin besteht, Heizelemente (24) zwischen dem besagten äußeren Abstrahlelement (22) und einer als Träger für dieses Element dienenden Platte (10) zu integrieren, um besagte Strömungen durch Anwendung der Heizvorrichtungen (24) zu simulieren, **dadurch gekennzeichnet, daß** besagte Heizelemente dauerhaft integriert sind.

2. Verfahren gemäß Anspruch 1, **dadurch gekennzeichnet, daß** Heizvorrichtungen (24) verwendet werden, die während der Simulation der äußeren Wärmeströmung über elektrische Leitungen mit einer äußeren Stromquelle verbunden sind.

3. Verfahren gemäß Anspruch 2, **dadurch gekennzeichnet, daß** nach Beendigung der Simulation der äußeren Wärmeströmung die elektrischen Leitungen abgetrennt und die elektrischen Verbindungselemente (36) der Heizvorrichtungen (24) mit der Masse des Raumfahrzeugs verbunden werden.

4. Verfahren gemäß einem oder mehreren der vorgenannten Ansprüche, **dadurch gekennzeichnet, daß** die Heizvorrichtungen (24) in einem einzigen Vorgang während der Montage des äußeren Abstrahlelements (22) auf der Platte (10) integriert werden.

5. Verfahren gemäß Anspruch 4, **dadurch gekennzeichnet, daß** auf der Platte (10) nacheinander eine erste Klebefolie (32), zueinander parallele Heizbänder (26), die die Heizvorrichtungen (24) bilden, eine zweite Klebefolie (34) und das äußere Abstrahlelement (22) aufgebracht werden und die so angeordnete Baugruppe einem Druck ausgesetzt wird, der die Klebung bewirkt.

6. Raumfahrzeug mit einer Struktur, welche Platten (10) beinhaltet, von denen mindestens eine auf einer Außenseite (18) mindestens ein äußeres Abstrahlelement (22) trägt, **dadurch gekennzeichnet, daß** Heizvorrichtungen (24), die während einer Simulation der im Flug durch besagtes äußeres Abstrahlelement (22) absorbierten äußeren Wärmeströmungen verwendet werden können, dauerhaft zwischen diesem Element und der als Träger für dieses Element dienenden Platte (10) integriert sind.

7. Raumfahrzeug gemäß Anspruch 6, **dadurch gekennzeichnet, daß** die Heizvorrichtungen elektrische Heizvorrichtungen (24) sind.

8. Raumfahrzeug gemäß Anspruch 7, **dadurch gekennzeichnet, daß** die elektrischen Heizvorrichtungen (24) parallel zueinander verlaufende Heizbänder (26) beinhalten, deren Enden jenseits der Außenränder des Abstrahlelements über elektrische Verbindungselemente (36) miteinander verbunden sind.

9. Raumfahrzeug gemäß Anspruch 8 , **dadurch gekennzeichnet, daß** jedes der Heizbänder (26) aus einer Folie aus feuerfestem Material (28) besteht, die zwischen zwei isolierenden Folien (30) angeordnet ist.

10. Raumfahrzeug gemäß Anspruch 9, **dadurch gekennzeichnet, daß** die Folie aus feuerfestem Material (28) und die beiden isolierenden Folien (30) Öffnungen aufweisen, die gleichmäßig auf ihrer Oberfläche verteilt sind.

## Claims

1. A method of simulating external thermal fluxes absorbed by at least one external radiating component (22) of a spacecraft (11) in flight, the method consisting in integrating heating means (24) between said external radiating component (22) and a panel (10) carrying it and using the heating means (24) to simulate said fluxes, the method being **characterized in that** said heating means are integrated permanently.

2. A method according to claim 1, **characterized in that** electrical heating means connected by electrical conductors to an external electrical power supply are used to simulate the external thermal flux.

3. A method according to claim 2, **characterized in that** when simulation of the external thermal flux is completed, the electrical conductors are cut and electrical connectors (36) of the heating means (24) are connected to the spacecraft earth.

4. A method according to any preceding claim, **characterized in that** the heating means (24) are integrated in a single operation during mounting of the external radiating component (22) on the panel (10).

5. A method according to claim 4, **characterized in that** a first film (32) of adhesive, parallel heating strips (26) forming the heating means (24), a second film (34) of adhesive and the external radiating component (22) are placed on the panel (10) in succession and pressure is applied to the resulting assembly to bond it.

6. A spacecraft having a structure including panels of which at least one panel (10) carries at least one external radiating component (22) on an external face (18), **characterized in that** heating means (24) used to simulate external thermal fluxes absorbed by said external radiating component (22) in flight are permanently integrated between that component and the panel (10) which carries it.

7. A spacecraft according to claim 6, **characterized in that** the heating means are electrical heating means (24).

8. A spacecraft according to claim 7, **characterized in that** the electrical heating means (24) include parallel heating strips (26) whose ends are connected together by electrical connectors (36) beyond the peripheral edges of the radiating component (22).

9. A spacecraft according to claim 8, **characterized in that** each of the heating strips (26) is a film (28) of refractory material inserted between two insulative films (30).

10. A spacecraft according to claim 9, **characterized in that** the film (28) of refractory material and the two insulative films (30) have holes regularly distributed over their surface.
